# EUROPÄISCHE PATENTSCHRIFT

(11) **EP 0 693 404 B1**
(45) Veröffentlichungstag und Bekanntmachung des Hinweises auf die Patenterteilung: **14.04.1999**
(21) Anmeldenummer: 95110404.1
(22) Anmeldetag: 04.07.1995
(51) Int. Cl.: B60R 21/32

(54) **Verfahren zur Auslösung von Seitenairbags einer passiven Sicherheitseinrichtung für Kraftfahrzeuge**
Method for deploying side air bags of a passive safety device in a motor vehicle
Procédé pour déclencher des sacs à air latéraux d'un dispositif de sécurité passif dans un véhicule automobile

(30) Priorität: 21.07.1994 DE 4425846
(43) Veröffentlichungstag der Anmeldung: 24.01.1996
(73) Patentinhaber: TEMIC TELEFUNKEN microelectronic GmbH, 74072 Heilbronn (DE)
(72) Erfinder: Fendt, Günter, D-86529 Schrobenhausen (DE); Hora, Peter, D-86529 Schrobenhausen (DE); Spies, Hans, D-85276 Pfaffenhofen (DE); Steurer, Helmut, D-85302 Junkenhofen (DE); Watzka, Willibald, D-86551 Aichach (DE); Wetzel, Guido, D-86633 Neuburg (DE)
(74) Vertreter: Maute, Hans-Jürgen, Dipl.-Ing.

(56) Entgegenhaltungen:
- EP-A- 0 292 669
- EP-A- 0 342 401
- EP-A- 0 536 996
- WO-A-90/11207

## Beschreibung

Die Erfindung betrifft ein Verfahren zur Auslösung von Seitenairbags einer passiven Sicherheitseinrichtung für Kraftfahrzeuge gemäß dem Oberbegriff des Patentanspruches 1.

Ein Insassenschutzsystem für Kraftfahrzeuge besteht in der Regel aus einem Airbag-Auslösegerät als Steuereinheit, das vier Endstufen zur Ansteuerung des Fahrer-, Beifahrerairbags sowie des Gurtstraffers jeweils für Fahrer und Beifahrer umfaßt. Diese Airbags schützen die Fahrzeuginsassen nur bei einer Frontalkollision des Fahrzeugs, dagegen nicht bei einer Seitenkollision. Deshalb wurde vorgeschlagen, einen Airbag, einen sogenannten Seitenairbag, zum Zurückhalten der Seitwärtsbewegung der Fahrzeuginsassen im Bereich der Fahrzeugtür anzubringen. Aufgrund des geringen Deformationsweges bei einem Seitenaufprall ist für diese Seitenairbags eine geringe Auslösezeit von weniger als 5 msec erforderlich, so daß deshalb neben einem zentral im Kraftfahrzeug angeordneten, sowohl Frontal- als auch Seitenkollisionen detektierenden Kollisionssensor zusätzlich zwei weitere Kollisionssensoren erforderlich sind, die im Türbereich des Kraftfahrzeuges angeordnet werden. Diese ausgelagerten Sensoren sind auch deshalb erforderlich, da das durch den Crash erzeugte Beschleunigungssignal im zentralen Kollisionssensor aufgrund der größeren Entfernung zum Krafteinleitungspunkt innerhalb der geforderten Auslösezeit noch nicht auswertbar ist, da es zum notwendigen Auslösezeitpunkt noch nicht bis in den Mittelraum des Kraftfahrzeuges mit voller Amplitude vorgedrungen ist.

Ferner ist es bekannt, vor einer Auslösung des Fahrer- oder Beifahrerairbags nicht nur die Sensorsignale des zentralen Beschleunigungssensors zu bewerten, sondern auch den Zustand eines mechanischen Sicherheitsschalters, dessen Wirkrichtung parallel zur Fahrtrichtung des Kraftfahrzeuges liegt, zu berücksichtigen.

Da man jedoch bei einem Seitenaufprall die Schutzfunktion des mechanischen Sicherheitsschalters nicht nutzen kann, besteht die Aufgabe der Erfindung darin, ein Auslöseverfahren für Seitenairbags der eingangs genannten Art anzugeben, das ohne einen solchen Sicherheitsschalter auskommt.

Die Lösung der Aufgabe ist durch die kennzeichnenden Merkmale des Patentanspruches 1 gegeben. Hiernach wird ein Sicherheitskonzept vorgeschlagen, das die Informationen des zentral im Kraftfahrzeug angeordneten Kollisionssensors mit den Informationen der Seitenkollisionssensoren verknüpft und daraus ein Auslösesignal ableitet. Bei dem erfindungsgemäßen Verfahren wird ein Auslösesignal für einen Seitenairbag einerseits dann erzeugt, wenn der zentral angeordnete Kollisionssensor und wenigstens einer der beiden Seitenkollisionssensoren ein Kollisionssignal erzeugt, wobei eines dieser beiden Kollisionssignale einen größeren Wert aufweist und andererseits der zentral angeordnete Kollisionssensor als auch einer der beiden Seitenkollisionssensoren ein Kollisionssignal gleicher Höhe liefert und gleichzeitig der andere Seitenkollisionssensor ebenfalls ein Kollisionssignal erzeugt, dessen Wert dem Wert des vom zentralen Kollisionssensor erzeugten Kollisionssignal entspricht oder kleiner als dieser Wert ist. Dabei liegt ein Kollisionssignal dann vor, wenn der Wert des entsprechenden Sensorsignales einen bestimmten Schwellwert übersteigt, wobei zur Bewertung der Stärke einer Kollision weitere aufsteigend angeordnete Schwellwerte vorgegeben sind, die mit den Werten der Sensorsignale verglichen werden.

Dieses erfindungsgemäße Auslöseverfahren für Seitenairbags läßt den Aufbau einer Airbag-Sicherheitseinrichtung zu, die eine hohe Auslösesicherheit bei niedriger Fehlauslösewahrscheinlichkeit aufweist, wobei in vorteilhafter Weise auf den Einsatz eines mechanischen Sicherheitsschalters in Seitenrichtung verzichtet werden kann.

Gemäß dem erfindungsgemäßen Verfahren wird auch dann ein Auslösesignal für einen der Seitenairbags erzeugt, wenn sowohl der zentral angeordnete Kollisionssensor als auch gleichzeitig ein Seitenkollisionssensor jeweils ein Kollisionssignal gleicher Stärke liefern, wobei deren Werte den größten Schwellwert übersteigen.

Ein weiterer Vorteil der erfindungsgemäßen Auslösestrategie für Seitenairbags liegt darin, daß auch dann noch eine sichere Auslösung der Seitenairbags gewährleistet ist, wenn einer der beiden ausgelagerten Sensoren defekt ist, also keine Kollisionssignale erzeugt.

Ferner kann bei einer anderen bevorzugten Ausführungsform der Erfindung für die Bewertung der von den Seitenkollisionssensoren erzeugten Kollisionssignale im Vergleich zu der Anzahl der für den zentral angeordneten Kollisionssensor vorgesehenen Anzahl von Schwellwerten jeweils eine geringere Anzahl vorgesehen werden. Dies trägt dem Umstand Rechnung, daß das Gerät an unterschiedliche Fahrzeugcharakteristiken adaptierbar ist.

Schließlich wird gemäß der Erfindung auch dann ein Auslösesignal erzeugt, wenn ausschließlich ein Kollisionssignal des zentral angeordneten Kollisionssensors vorliegt und dessen Wert den größten Schwellwert übersteigt. Somit wird bei defekten Seitenkollisionssensoren trotzdem eine Auslösung eines der Seitenairbags sichergestellt, wenn der zentral angeordnete Kollisionssensor einen starken Seitenaufprall detektiert, so daß in einem solchen Fall die Fahrzeuginsassen wenigstens bei schweren Kollisionen geschützt sind.

Im folgenden soll das erfindungsgemäße Verfahren anhand einer Auslöseeinrichtung für Airbags im Zusammenhang mit den Zeichnungen dargestellt und erläutert werden. Es zeigen:
- Figur 1: ein Blockschaltbild einer Auslöseeinrichtung für Airbags zur Durchführung des erfindungsgemäßen Verfahrens,
- Figur 2: eine Auslöse-Matrix bei einem Seitenaufprall von der linken Seite,
- Figur 3: Geschwindigkeitsänderung-Zeit-Diagramme mit entsprechenden Schwellwerten zur Bewertung der Stärke einer Kollision eines Seitenkollisionssensors als auch eines zentral angeordneten Kollisionssensors und
- Figur 4: ein weiteres Ausführungsbeispiel einer Auslöse-Matrix bei einer Seitenkollision von der linken Seite.

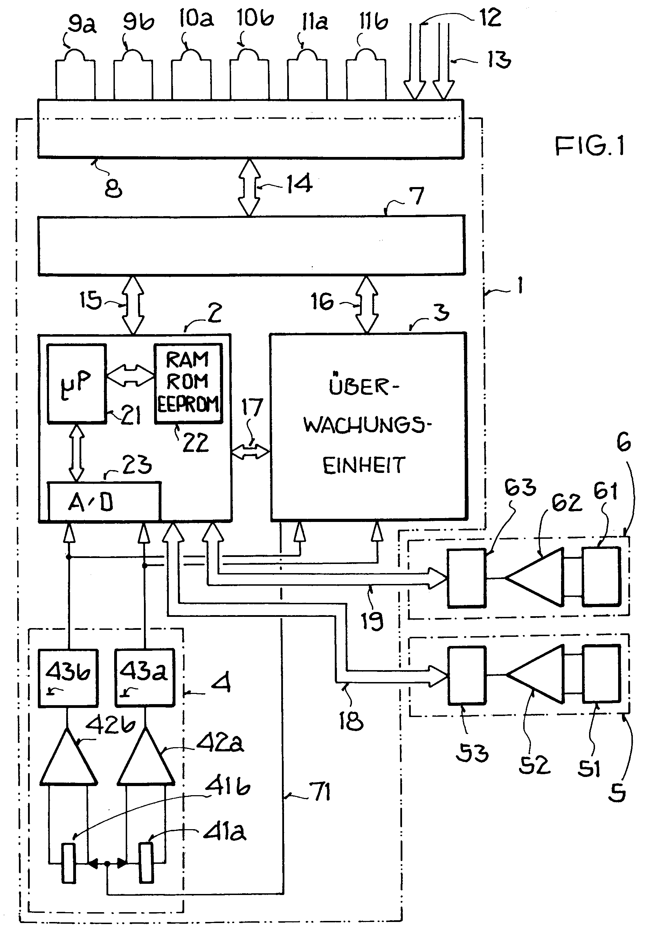

In Figur 1 ist eine zentrale Steuereinheit mit dem Bezugszeichen 1 bezeichnet, die auf einer Elektronikplatine an einer zentralen Stelle im Kraftfahrzeug angeordnet ist und einen zentralen Beschleunigungsaufnehmer 4 enthält. Beim Beschleunigungsaufnehmer 4 handelt es sich im Grunde genommen um ein Beschleunigungsaufnehmersystem, da auch die Verwendung von zwei Einzelaufnehmern oder von separaten Aufnehmern denkbar ist. Neben diesem Beschleunigungsaufnehmer 4, der sowohl Frontal- als auch Seitenkollisionen detektieren kann, sind zur ausschließlichen Detektion von Seitenkollisionen im Bereich der Fahrzeugtüren jeweils eine Sensoreinheit 5 und 6 vorgesehen, die jeweils über eine Datenleitung 18 und 19 mit einem Mikroprozessor 2 der Steuereinheit 1 verbunden sind. Auch die von dem Beschleunigungsaufnehmer 4 erzeugten Sensorsignale werden über einen A/D-Wandler 23 ebenfalls diesem Mikroprozessor 2 zugeführt.

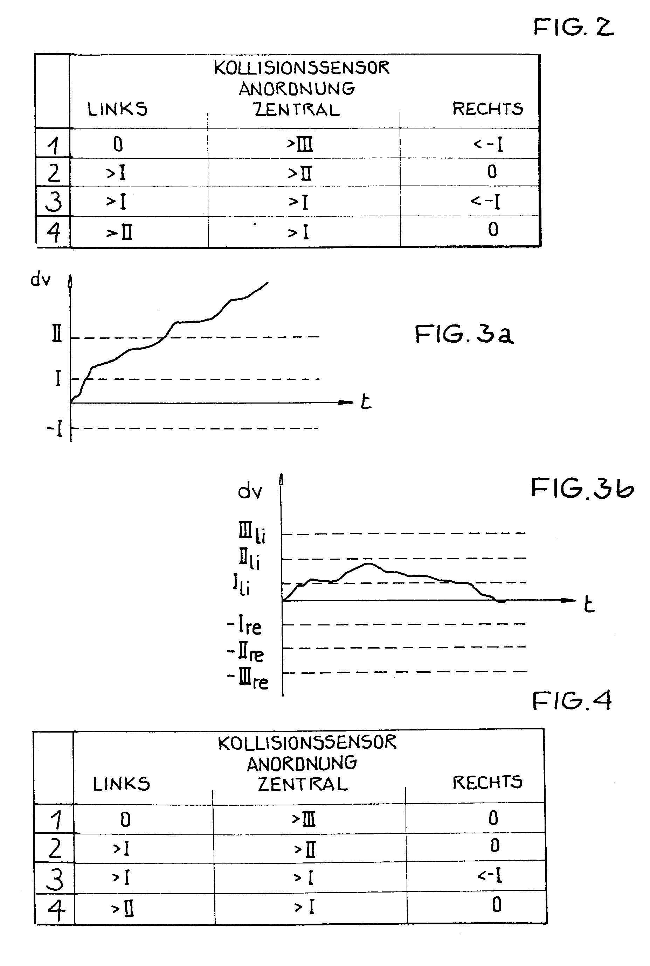

Der Beschleunigungsaufnehmer 4 besteht aus zwei Beschleunigungssensoren 41a und 41b, deren Sensorsignale mittels Verstärkereinheiten 42a und 42b verstärkt und vor Weiterleitung an den Mikroprozessor 2 jeweils einer Filtereinheit 43a bzw. 43b zugeführt werden. Diese beiden Sensoren 41a und 41b sind in ± 45°-Richtung zur Fahrtrichtung angeordnet, wodurch auch ein Schrägaufprall oder eine Seitenkollision detektierbar ist. Die Sensoreinheiten 5 und 6 sind in ähnlicher Weise aufgebaut, jedoch jeweils mit einem einzigen Sensorelement 51 bzw. 61, in der Regel als Stoßsensor ausgebildet, einem Verstärkerelement 52 bzw. 62 und im Gegensatz zu dem Beschleunigungsaufnehmer 4 zusätzlich mit einer Signalverarbeitungsschaltung 53 bzw. 63, bei der es sich vorteilhaft um einen Mikroprozessor handelt. Diese Signalverarbeitungsschaltung 53 bzw. 63 nimmt bezüglich der Werte der von den Sensoren 51 und 61 erzeugten Sensorsignale eine Bewertung vor. Der Wert der Sensorsignale verhält sich proportional zur Geschwindigkeitsänderung pro Zeiteinheit, so daß mittels eines vorgegebenen festen Schwellwertes I gemäß Figur 3a nur dann ein Kollisionssignal vorliegt, wenn dieser Schwellwert von dem Sensorsignal überschritten wird. Ein stärkerer Seitenaufprall liegt dann vor, wenn das Sensorsignal einen weiteren zweiten Schwellwert II übersteigt, dessen Wert größer als der erste Schwellwert I, also I < II ist. Ein mit einem Minuszeichen versehener Schwellwert -I oder -II zeigt an, daß bei dessen Unterschreiten durch das Sensorsignal eine Seitenkollision von der entgegengesetzten Seite vorliegt. Die Bewertung der Sensorsignale hinsichtlich dieser Schwellwerte I und II bzw. -I und -II nimmt die Signalverarbeitungsschaltung 53 bzw. 63 vor und leitet die entsprechenden digitalen Daten auf der Leitung 18 bzw. 19 dem Prozessor 2 der Auslöseschaltung 1 zu.

Da die Sensoreinheiten 5 und 6 nicht auf der die zentrale Steuereinheit 1 tragenden Leiterplatte angeordnet ist, spricht man auch von ausgelagerten Sensoreinheiten.

Auch zur Bewertung der von dem Beschleunigungsaufnehmer 4 erzeugten Sensorsignale werden anhand von drei Schwellwerten I, II und III vorgenommen, wie sie gemäß Figur 3b dargestellt sind. Zur Erkennung eines Schrägaufpralles bzw. eines Seitenaufpralles sind die beiden Sensorelemente 41a und 41b in +/- 45° zur Fahrtrichtung des Fahrzeuges angeordnet. Die Unterscheidung zwischen einem Frontal- und einem Seitenaufprall nimmt dar Mikroprozessor 2 vor und bewertet bei Vorliegen eines Seitenaufpralles außerdem dessen Stärke anhand der vorgegebenen Schwellwerte I, II und III. Schließlich kann anhand der von dem Beschleunigungsaufnehmer 4 erzeugten Sensorsignale auch ein linker Seitenaufprall von einem rechten Seitenaufprall unterschieden werden. Gemäß Figur 3b liegt ein linker Seitenaufprall vor, wenn das entsprechende Sensorsignal den kleinsten Schwellwert I überschreitet, dagegen wird ein rechter Seitenaufprall detektiert, wenn das entsprechende Sensorsignal kleiner als die negativen Werte der Schwellwerte -I, -II und -III sind. Diese Unterscheidung zwischen links und rechts ist in Figur 3b durch Indizes "li" und "re" angedeutet.

Die Steuereinheit 1 enthält ferner eine sogenannte Überwachungseinheit 3, die die Steuereinheit 1 ständig auf ihre Funktionsfähigkeit überprüft. Diese Überwachungseinheit 3 ist über eine Datenleitung 17 mit dem Mikroprozessor 2 verbunden, in dessen Speichereinheit 22 unter anderem auch der Auslösealgorithmus abgelegt ist. Schließlich nimmt diese Überwachungseinheit 3 über eine Leitung 71 eine Prüfung des Zwei-Kanal-Beschleunigungsgebers 4 vor.

Der Mikroprozessor 2 als auch die Überwachungseinheit 3 sind über eine Datenleitung 15 und 16 mit einer Endstufen- und Interfaceschaltung 7 verbunden, die ihrerseits über eine Leitung 14 an eine Steckereinheit 8 angeschlossen ist. Diese Steckereinheit 8 stellt die entsprechenden Verbindungen zu den Auslösemitteln, also den Zündpillen des Fahrer- und Beifahrerairbags 9a und 9b, den Seitenairbags 10a und 10b sowie den Gurtstraffern 11a und 11b für Fahrer und Beifahrer her. Schließlich wird über diese Steckereinheit 8 mittels einer Datenleitung 12 die Sitzbelegungserkennung sowie eine Diagnoseleitung 13 geführt.

Zur Auslösung eines Seitenairbags 10a oder 10b werden die von den ausgelagerten Sensoreinheiten 5 und 6 erzeugten Signale mit den aus den von dem Beschleunigungsaufnehmer 4 abgeleiteten Bewertungsergebnisse durch den Mikroprozessor 2 verknüpft und hieraus ein Auslösesignal abgeleitet. Die Verknüpfung der entsprechenden Informationen, die über eine Auslösung entscheidet, ist gemäß Figur 2 in einer Auslöse-Matrix dargestellt und beispielhaft für einen Seitenaufprall von der linken Seite bestimmt. Hieraus ist ersichtlich, daß für den Auslösefall sowohl ein Mikroprozessor 53 oder 63 der ausgelagerten Sensoreinheit 5 oder 6 als auch der Mikroprozessor 2 bei der Bewertung der Sensorsignale des Beschleunigungsaufnehmers 4 ein Kollisionssignal erkennen müssen, d. h., daß die entsprechenden Sensorsignale den ersten Schwellwert I überschreiten müssen. So wird gemäß Figur 2 ein Auslösesignal erzeugt, wenn der zentral angeordnete Kollisionssensor, also der Beschleunigungsaufnehmer 4 gemäß Figur 1 ein Sensorsignal erzeugt, dessen Wert den Schwellwert IIIₗᵢ gemäß Figur 3b überschreitet und gleichzeitig der rechte Kollisionssensor ein Sensorsignal abgibt, das kleiner als der negative Schwellwert -I (vgl. Figur 3a) ist. Dabei wird das Auslösesignal unabhängig von der Information des linken Kollisionssensors erzeugt. D. h., daß im Falle eines defekten linken Kollisionssensors eine sichere Auslösung gewährleistet ist. Auch bei einem defekten rechten Kollisionssensors, wie es in der zweiten oder vierten Zeile der Auslöse-Matrix gemäß Figur 2 dargestellt ist, wird ein sicheres Auslöseverhalten gewährleistet. Dabei liefern die entsprechenden Sensoren ein Sensorsignal, das entweder größer als der erste oder größer als der zweite Schwellwert gemäß den Figuren 3a und 3b hinsichtlich des zentral angeordneten Kollisionssensors oder hinsichtlich des linken Kollisionssensors ist. Hierbei ist zu beachten, daß die entsprechenden Schwellwerte für die Seitenkollisionssensoren bzw. den zentral angeordneten Kollisionssensor unterschiedliche Werte aufweisen können. Dadurch wird erreicht, daß im Crash-Fall immer eine sichere Auslösung gewährleistet ist und der Sensor an unterschiedliche Fahrzeugstrukturen angepaßt werden kann. Zusammenfassend besteht also die Auslösestrategie für die Seitenairbags darin, daß der zentral angeordnete Kollisionssensor als auch wenigstens ein Seitenkollisionssensor jeweils ein einen Seitenaufprall anzeigendes Kollisionssignal erzeugen muß, wobei einer der beiden Werte im Vergleich zum anderen Wert den nächstgrößeren Schwellwert übersteigt bzw. beide Werte die entsprechenden Schwellwerte deutlich übersteigen.

Die Zeile 3 der Auslöse-Matrix gemäß Figur 2 regelt den Auslösefall, wo sowohl der zentral angeordnete Kollisionssensor als auch ein Seitenkollisionssensor ein Kollisionssignal erzeugen, die jedoch lediglich den ersten Schwellwert I übersteigen, aber nicht den nächsthöheren Schwellwert. In einem solchen Fall erfolgt keine Auslösung des Seitenairbags, sondern nur dann, wenn auch der zweite Seitenkollisionssensor ein entsprechendes Sensorsignal erzeugt, das eine Seitenkollision von der gleichen Seitenrichtung anzeigt. Diese Auslösestrategie wird auch dann angewendet, wenn sowohl der zentral angeordnete Kollisionssensor als auch ein Seitenkollisionssensor Sensorsignale erzeugen, deren Werte jeweils die zweiten Schwellwerte übersteigen, jedoch nicht den dritten Schwellwert.

Die sich in Figur 2 darstellende Auslösestrategie berücksichtigt also den Fall, daß einer der beiden Seitenkollisionssensoren defekt ist. Wenn dagegen beide ausgelagerten Sensoreinheiten nicht funktionsfähig sind, also keine Informationen zur Steuereinheit übertragen, erfolgt keine Auslösung bei einem Seitenaufprall.

Um dennoch bei zwei defekten ausgelagerten Sensoreinheiten den Fahrzeuginsassen einen gewissen Schutz zu bieten, sieht die Auslösestrategie gemäß Figur 4 auch dann eine Auslösung eines Seitenairbags vor, wenn der zentral angeordnete Kollisionssensor einen schweren Seitenaufprall detektiert, d. h. der Wert des entsprechenden Sensorsignales übersteigt den größten Schwellwert, also den Schwellwert III. Somit wird dem zentralen Steuergerät allein ermöglicht, ab einer bestimmten Unfallschwere auch dann auszulösen, wenn beide ausgelagerten Sensoreinheiten defekt sind. Ansonsten entspricht die Auslösestrategie der Auslöse-Matrix nach Figur 4, wie es in deren Zeilen 3, 4 und 5 dargestellt ist, derjenigen nach Figur 2.

## Patentansprüche

1. Verfahren zur Auslösung von Seitenairbags (10a, 10b) einer passiven Sicherheitseinrichtung für Kraftfahrzeuge, die außerdem einen Fahrer- und Beifahrerairbag (9a, 9b), einen zentral im Kraftfahrzeug angeordneten, Frontal- und Seitenkollisionen detektierenden Kollisionssensor (4) und einen linken und rechten Seitenkollisionssensor (5, 6) sowie eine die von den Kollisionssensoren erzeugten Sensorsignale auswertenden Steuereinheit (1) aufweist, wobei zur Bewertung der Stärke einer Seitenkollision sowohl für die Sensorsignale des zentral angeordneten Kollisionssensors als auch für die Sensorsignale der Seitenkollisionssensoren jeweils Schwellwerte (I, II, III) vorgegeben sind und ein Kollisionssignal dann erzeugt wird, wenn ein Sensorsignal den niedrigsten Schwellwert (I) übersteigt, dadurch gekennzeichnet, daß ein Auslösesignal für einen Seitenairbag dann erzeugt wird, wenn
a) der zentral angeordnete Kollisionssensor (4) als auch gleichzeitig wenigstens ein Seitenkollisionssensor (5, 6) jeweils ein einen Seitenaufprall anzeigendes Kollisionssignal erzeugt, wobei wenigstens eines der Sensorsignale den nächstgrößeren Schwellwert (II) übersteigt, oder
b) der zentral angeordnete Kollisionssensor (4) als auch gleichzeitig ein Seitenkollisionssensor (5/6) jeweils ein einen Seitenaufprall anzeigendes Kollisionssignal liefern, und
gleichzeitig der andere Seitenkollisionssensor (6/5) ein den gleichen Seitenaufprall anzeigendes, entsprechend entgegengesetzt gerichtetes Kollisionssignal liefert, welches kleiner als ein dem niedrigsten Schwellwert (I) betragsmäßig entsprechender negativer Schwellwert (-I) ist, oder
c) wenn zumindest der zentral angeordnete Kollisionssensor ein Kollisionssignal erzeugt, dessen Wert den größten Schwellwert (III) übersteigt.

2. Verfahren nach Anspruch 1, dadurch gekennzeichnet, daß für die Bewertung der Stärke der von den Seitenkollisionssensoren erzeugten Sensorsignale eine geringere Anzahl von Schwellwerten vorgesehen sind als für die von dem zentral angeordneten Kollisionssensor erzeugten Kollisionssignale.

## Claims

1. Method for triggering side air bags (10a, 10b) of a passive safety device for motor vehicles, which also comprises a driver's and a front-seat passenger's air bag (9a, 9b), a collision sensor (4), which is disposed centrally in the motor vehicle and detects head-on and side collisions, a left-hand and a right-hand side collision sensor (5, 6) and a control unit (1), which evaluates the sensor signals generated by the collision sensors, wherein respective threshold values (I, II, III) are predetermined in order to assess the force of a side collision, both for the sensor signals of the centrally disposed collision sensor and for the sensor signals of the side collision sensors, and a collision signal is generated if a sensor signal exceeds the minimum threshold value (I), characterised in that a trigger signal for a side air bag is generated if
a) the centrally disposed collision sensor (4) as well as at least one side collision sensor (5, 6) each simultaneously generates a collision signal which indicates a side impact, wherein at least one of the sensor signals exceeds the next-greater threshold value (II), or
b) the centrally disposed collision sensor (4) as well as a side collision sensor (5/6) each simultaneously delivers a collision signal which indicates a side impact, and
the other side collision sensor (6/5) simultaneously delivers a correspondingly opposite signal which indicates the same side impact and which is smaller than a negative threshold value (-I) corresponding in terms of magnitude to the minimum threshold value (I), or
c) if at least the centrally disposed collision sensor generates a collision signal whose value exceeds the maximum threshold value (III).

2. Method according to claim 1, characterised in that a smaller number of threshold values are provided to assess the strength of the sensor signals generated by the side collision sensors than for the collision signals generated by the centrally disposed collision sensor.

## Revendications

1. Procédé pour déclencher des coussins à air latéraux (10a, 10b) d'un système de sécurité passif pour véhicule, qui comprend en outre un coussin à air pour un conducteur et pour un passager (9a, 9b), un détecteur de collision (4) agencé au centre dans le véhicule et détectant des collisions frontales et des collisions latérales, et un détecteur de collision de gauche et un détecteur de collision de droite (5,6), ainsi qu'une unité de commande (1) qui exploite les signaux de détection produits par les détecteurs de collision, dans lequel des valeurs seuil (I, II, III) respectives sont prédéterminées pour les signaux de détection du détecteur de collision central ainsi que pour les signaux de détection des détecteurs de collision latéraux pour évaluer l'intensité d'une collision latérale, et un signal de collision est produit lorsqu'un signal de détection dépasse la valeur seuil la plus basse (I),
caractérisé en ce qu'un signal de déclenchement pour un coussin à air latéral est produit lorsque :
a) le détecteur de collision central (4) ainsi que simultanément au moins un détecteur de collision latéral (5, 6) produisent chacun un signal de collision indiquant une collision latérale, et l'un au moins des signaux de détection dépasse la valeur seuil (II) immédiatement supérieure, ou bien
b) le détecteur de collision central (4) ainsi que simultanément un détecteur de collision latéral (5/6) délivrent respectivement un signal de collision indiquant une collision latérale, et
simultanément l'autre détecteur de collision latéral (6/5) délivre un signal de collision qui indique la même collision latérale et dirigé par conséquent en sens opposé, ce signal étant inférieur à une valeur seuil négative (-I) qui correspond quant à sa valeur à la valeur seuil la plus basse (I), ou bien
c) le détecteur de collision central au moins produit un signal de collision dont la valeur dépasse la valeur seuil la plus élevée (III).

2. Procédé selon la revendication 1, caractérisé en ce que pour l'évaluation de l'intensité des signaux de détection qui sont produits par les signaux détecteurs de collision latéraux, on impose un nombre de valeurs seuil plus faible que pour les signaux de collision qui sont produits par le détecteur de collision central.
